# FASCICULE DE BREVET EUROPEEN

(11) **EP 3 152 167 B1**
(45) Date de publication et mention de la délivrance du brevet: **04.08.2021**
(21) Numéro de dépôt: 16730724.8
(22) Date de dépôt: 03.06.2016
(51) Int. Cl.: C02F 11/10, C10L 9/08, F23G 5/027, F23G 7/00

(54) **PROCÉDÉ ET DISPOSITIF DE CARBONISATION HYDROTHERMALE À MÉLANGE OPTIMISÉ DE BOUE ET VAPEUR**
HYDROTHERMALKARBONISATIONSVERFAHREN UND VORRICHTUNG MIT OPTIMIERTEM SCHLAMM- UND DAMPFMISCHEN
HYDROTHERMAL CARBONIZATION METHOD AND DEVICE WITH OPTIMISED SLUDGE AND STEAM MIXING

(30) Priorité: 05.06.2015 FR 1555146
(43) Date de publication de la demande: 12.04.2017
(73) Titulaire: Suez International, 92040 Paris la Défense Cedex (FR)
(72) Inventeur: PARDO, Pierre Emmanuel, 91400 Orsay (FR); BOURDAIS, Jean-Louis, 44110 Chateaubriant (FR)
(74) Mandataire: August Debouzy
(86) Numéro de dépôt international: PCT/EP2016/062702
(87) Numéro de publication internationale: WO 2016/193462

(56) Documents cités:
- EP-A1- 2 206 688
- WO-A1-2010/092040
- WO-A1-2014/178028
- KUNIO YOSHIKAWA: "The Second InteHydrothermal Treatment of Municipal Solid Waste and Sewage Sludge to Produce Solid Fuel and Liquid Fertilizer", THE SECOND INTERNATIONAL ENERGY 2030 CONFERENCE, 4 novembre 2008 (2008-11-04), XP055099029,

## Description

### Domaine technique

La présente invention concerne un procédé et un dispositif de carbonisation hydrothermale.

Le domaine de l'invention est plus particulièrement mais de manière non limitative celui du traitement de boues fortement chargées en matières organiques, provenant par exemple de processus de dépollution d'eaux usées urbaines ou industrielles, ou d'opérations de curage de réseaux. Un tel traitement vise à réduire le volume des boues, à les stabiliser sur le plan biologique et sur le plan physico-chimique et à produire des sous-produits valorisables.

L'invention concerne plus particulièrement le domaine du procédé et dispositif de carbonisation hydrothermale en continu de boues contenant de la matière organique.

### Etat de la technique antérieure

L'état de l'art a développé deux familles de traitements :
- l'hydrolyse thermique,
- la carbonisation hydrothermale.

La technique d'hydrolyse thermique des boues a été mise au point par Porteous au début du 20ème siècle. Cette technique met en œuvre des réacteurs sous pression, fonctionnant par séquence. Typiquement, les boues sont pompées dans un premier réacteur dans lequel de la vapeur produite par une chaudière est injectée jusqu'à l'obtention d'une température d'environ 180°C pour une pression de 1,5 MPa à l'intérieur de ce premier réacteur, la température y est ensuite maintenue pendant 30 minutes puis les boues sont évacuées sous leur propre pression à travers un échangeur thermique. Cet échangeur thermique est utilisé pour récupérer de la chaleur contenue dans les boues sortant du premier réacteur et pour réchauffer les boues avant leur entrée dans un deuxième réacteur. De nombreuses évolutions et améliorations sont intervenues depuis pour améliorer la productivité et assurer un fonctionnement en continu. Les boues hydrolysées, c'est-à-dire ayant subies un tel traitement dans un réacteur, font ensuite l'objet de traitements biologiques, par exemple de digestion anaérobie pour réduire les quantités de boues en produisant du biogaz.

La technique de la carbonisation hydrothermale (HTC) se rapproche de l'hydrolyse thermique mais ne vise pas à préparer des boues en vue de leur digestion, elle vise plutôt à la transformation des boues en bio-charbon carboneutre de grande qualité, par le recours à la chaleur et à une pression généralement plus élevée que dans l'hydrolyse thermique, et en assurant un temps de séjour des boues plus long que pour l'hydrolyse thermique (quelques heures) et généralement en présence d'un réactif.

La technique HTC permet également de produire du biocharbon, un produit semblable à l'humus, qui peut être employé pour amender les sols agricoles et stocker le CO2. La technique de carbonisation hydrothermale a été décrite en 1913 par Friedrich Bergius, et lui a valu le Prix Nobel de chimie en 1931.

On connaît dans l'état de la technique le brevet FR3010403 qui décrit un procédé et un dispositif pour l'hydrolyse thermique de boues contenant de la matière organique, ledit procédé comprenant des étapes consistant à :
- réaliser simultanément une injection de vapeur de récupération dans lesdites boues et un mélange desdites boues avec ladite vapeur de récupération au moyen d'un injecteur-mélangeur dynamique primaire de façon à obtenir un mélange uniforme primaire ;
- réaliser simultanément une injection de vapeur vive dans ledit mélange uniforme primaire et un mélange dudit mélange uniforme primaire avec ladite vapeur vive au moyen d'un injecteur-mélangeur dynamique secondaire de façon à obtenir un mélange uniforme secondaire ;
- acheminer ledit mélange uniforme secondaire vers un réacteur tubulaire sous pression et provoquer l'écoulement essentiellement en flux piston de ce mélange uniforme secondaire dans ledit réacteur tubulaire selon un temps de séjour suffisant et à une température suffisante pour permettre une hydrolyse thermique de la matière organique présente dans ce mélange uniforme secondaire ;
- produire ladite vapeur de récupération au sein de moyens de production de vapeur de récupération à partir dudit mélange uniforme secondaire obtenu en sortie dudit réacteur tubulaire ;
- refroidir ledit mélange uniforme secondaire à sa sortie desdits moyens de production de vapeur de récupération à une température permettant une digestion ultérieure de la matière organique hydrolysée qu'il contient.

Le brevet américain US8673112 décrit aussi un procédé pour l'hydrolyse thermique consistant à :
(i) amener de la biomasse (en particulier des boues) de manière approximativement continue pour lui faire subir une première étape de préchauffage et la préchauffer,
(ii) entraîner séquentiellement la biomasse préchauffée dans au moins deux réacteurs,
(iii) chauffer et mettre un réacteur sous pression par ajout de vapeur,
(iv) maintenir les réacteurs à une certaine température et pression pendant un certain temps,
(v) amener la biomasse chauffée et sous pression provenant des réacteurs dans un premier réservoir de décompression sans réduction substantielle quelconque de pression et décompression rapide de la biomasse, au moyen d'une buse, afin de la désintégrer,
(vi) transférer la biomasse du premier réservoir de décompression dans un second réservoir de décompression dont la pression est inférieure à la pression du premier réservoir de décompression,
(vii) et amener la biomasse ainsi traitée dans une installation aval pour lui faire subir un traitement ultérieur.

Ce brevet américain US8673112 concerne aussi un dispositif pour le traitement thermique de la biomasse.

La demande de brevet internationale WO2014135734 décrit un procédé qui fonctionne en continu pour l'hydrolyse thermique de matière organique, comprenant une étape de préchauffage, une étape ultérieure de réaction et une étape de dépressurisation. L'étape de préchauffage comprend une recirculation de la matière organique à hydrolyser dans un premier circuit de recirculation; l'étape de réaction comprend une recirculation dans un deuxième circuit de recirculation de la matière organique extraite du premier circuit de recirculation en la soumettant à une certaine pression et à une certaine température; et l'étape de dépressurisation comprend une décompression subie de la matière organique extraite en continu du deuxième circuit. Le brevet WO2010092040 décrit un autre procédé de carbonisation hydrothermale connu.

### Inconvénients des solutions de l'art antérieur

Les solutions de l'art antérieur ont été principalement développées pour le traitement par hydrolyse thermique, plutôt que par carbonisation hydrothermale. Elles concernent des procédés où les conditions de pression et de température sont intermédiaires, typiquement de 0,6 MPa et 160°C.

Ces solutions ne sont pas totalement satisfaisantes, en particulier pour des températures et pressions supérieures, car elles impliquent un apport en vapeur important, lors de l'injection de la biomasse (ou des boues) dans le réacteur. Ceci se traduit par une consommation énergétique mal maîtrisée et un coût de fonctionnement élevé, ainsi que par une siccité dégradée, la siccité étant définie par la teneur en matières sèches de la biomasse ou des boues.

Par ailleurs, les boues introduites dans un réacteur peuvent contenir des débris solides, notamment des agrégats minéraux qui peuvent colmater l'entrée du réacteur ou abimer les structures intérieures du réacteur. Les solutions de l'art antérieur ne permettent pas de réduire les risques de colmatage ou d'usure du réacteur.

Enfin, les injecteurs-mélangeurs nécessaires pour homogénéiser le mélange boues vapeur constituent des équipements chers et fragiles, notamment lorsqu'ils doivent fonctionner à des températures et pressions élevées telles que requises pour la carbonisation hydrothermale, où l'étanchéification des presse-étoupes devient difficile à réaliser.

En outre, pour des temps de séjour important, le fonctionnement en « flux-piston » est difficile à réaliser.

Le but de la présente invention est de résoudre au moins un des problèmes ou inconvénients susmentionnés.

### Exposé de l'invention

A cet effet, l'invention propose un procédé de carbonisation hydrothermale en continu de boues contenant de la matière organique, lesdites boues présentant une siccité comprise entre 10 et 30%, ledit procédé comportant une étape de réaction hydrothermale mise en œuvre dans un réacteur (et de préférence au moins une étape de refroidissement dans laquelle les boues ayant subies l'étape de réaction hydrothermale sont refroidies), l'étape de réaction hydrothermale comprenant les étapes suivantes :
- une étape d'injection de boues dans laquelle on injecte les boues dans le réacteur par une première entrée,
- une étape d'injection de vapeur dans laquelle on injecte de la vapeur dans le réacteur par une deuxième entrée, la deuxième entrée étant distincte de la première entrée,
- une étape de mise en circulation dans laquelle on met un mélange constitué par les boues et la vapeur injectées dans le réacteur en circulation au sein du réacteur,
- une étape d'extraction en continu, notamment hors phase de démarrage, d'au moins une partie du mélange contenu dans le réacteur par une sortie de boues.

Dans cette description, on entend par l'expression « extraction en continu » une extraction en continu avec un débit éventuellement variable, de préférence pilotée par des paramètres de fonctionnement du réacteur. Une telle extraction en continu peut être interrompue temporairement lorsque les régulations n'ont pas suffi à retrouver l'équilibre du procédé de carbonisation hydrothermale. L'extraction en continu n'est pas une extraction séquentielle, et n'est pas une extraction en lot ou en « batch ».

Le même raisonnement s'applique à l'expression « introduction en continu », c'est-à-dire que l'on peut remplacer dans le paragraphe précédent le mot « extraction » par le mot « introduction ».

Le procédé comprend en outre une étape de préchauffage dans laquelle on élève la température des boues avant leur injection dans le réacteur jusqu'à une température de préchauffage.

De préférence, la température de préchauffage peut être supérieure à 100°C, plus préférentiellement supérieure à 150°C, et la pression des boues lors de l'étape de préchauffage peut être supérieure à 0,1 MPa, plus préférentiellement supérieure à 0,2 MPa.

Lors de l'étape d'injection de vapeur, la vapeur peut être injectée à contre-courant du mélange circulant dans le réacteur (de préférence dans un sens opposé).

Dans un mode de réalisation, l'étape de mise en circulation est réalisée pour obtenir un flux uniformément mélangé.

Le procédé comporte en outre une étape de chauffage d'eau dans laquelle on transfère de la chaleur contenue dans les boues extraites du réacteur à de l'eau par l'intermédiaire d'un échangeur de chaleur, et dans laquelle on utilise l'eau ainsi chauffée pour produire la vapeur utilisée lors de l'étape d'injection de vapeur.

Le procédé peut comporter en outre une étape d'injection de réactif dans laquelle on injecte dans le réacteur un réactif, notamment un acide, pour maintenir le pH des boues contenues dans le réacteur à une valeur inférieure à 6.

Par ailleurs, le procédé peut comporter en outre une étape d'injection de réactif dans laquelle on injecte dans le réacteur un réactif, notamment d'une base, pour maintenir le pH des boues contenues dans le réacteur à une valeur supérieure à 8.

L'invention concerne aussi un dispositif de carbonisation hydrothermale en continu de boues contenant de la matière organique, lesdites boues présentant une siccité comprise entre 10 et 30% en poids de matière sèche, ce dispositif comprenant un réacteur, le réacteur comprenant :
- une première entrée agencée pour injecter les boues dans le réacteur, une deuxième entrée agencée pour injecter directement dans le réacteur de la vapeur, la deuxième entrée étant distincte de la première entrée,
- des moyens de mise en circulation agencés pour mettre un mélange constitué par les boues et la vapeur injectées dans le réacteur en circulation au sein du réacteur, et
- une sortie de boues agencée pour extraire du réacteur en continu au moins une partie du mélange qu'il contient.

Selon une caractéristique, ce dispositif selon l'invention comprend en outre un dispositif de préchauffage agencé pour élever la température des boues en amont de la première entrée par injection de vapeur dans les boues en amont du réacteur.

Selon une autre caractéristique avantageuse, le dispositif selon l'invention peut comprendre en outre un échangeur de chaleur additionnel agencé pour générer de la vapeur en utilisant de la chaleur contenue dans les boues extraites du réacteur, cette vapeur étant de la vapeur injectée dans les boues en amont du réacteur par le dispositif de préchauffage.

Le dispositif selon l'invention comprend en outre un échangeur de chaleur et une chaudière, cet échangeur de chaleur étant agencé pour transférer de la chaleur contenue dans les boues extraites du réacteur à de l'eau circulant entre cet échangeur de chaleur et la chaudière, la chaudière étant agencée pour fournir la vapeur injectée directement dans le réacteur.

Dans un mode de réalisation avantageux, le dispositif selon l'invention peut comprendre en outre un équipement de refroidissement agencé pour refroidir les boues extraites du réacteur, cet équipement de refroidissement étant monté en aval de l'échangeur de chaleur et de l'échangeur de chaleur additionnel.

Le dispositif selon l'invention peut comprendre en outre un économiseur agencé pour transférer de la chaleur contenue dans les boues extraites du réacteur à de l'eau circulant entre cet économiseur et d'une part l'échangeur de chaleur additionnel et d'autre part l'échangeur de chaleur.

L'économiseur est de préférence monté en aval de l'échangeur de chaleur additionnel.

L'économiseur est de préférence monté en amont de l'équipement de refroidissement.

### Description des figures et modes de réalisation

D'autres avantages et particularités de l'invention apparaîtront à la lecture de la description détaillée de mises en œuvre et de modes de réalisation nullement limitatifs, et des figures suivantes :
- la figure 1 est une vue schématique d'un premier mode de réalisation d'installation de carbonisation hydrothermale selon l'invention,
- la figure 2 est une vue schématique d'un deuxième mode de réalisation d'installation de carbonisation hydrothermale selon l'invention.

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

Dans la présente description de modes de réalisations et variantes, la vapeur est par défaut de la vapeur d'eau.

Par défaut, toute pression indiquée dans la présente description est une pression absolue.

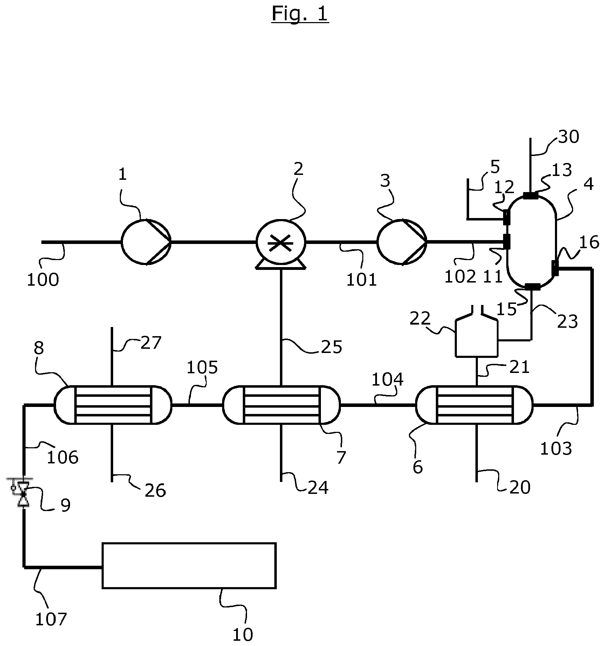

La figure 1 est un exemple de dispositif de carbonisation hydrothermale en continu de boues selon l'invention. Ce dispositif comprend un réacteur 4 agencé pour mettre en œuvre une étape de réaction hydrothermale.

Cette étape de réaction hydrothermale comprend les étapes suivantes :
- une étape d'injection de boues dans laquelle on injecte les boues dans le réacteur 4 par une première entrée 11,
- une étape d'injection de vapeur dans laquelle on injecte de la vapeur dans le réacteur 4 par une deuxième entrée 15, la deuxième entrée 15 étant distincte de la première entrée 11,
- une étape de mise en circulation dans laquelle on met un mélange constitué par les boues et la vapeur injectées dans le réacteur 4 en circulation au sein du réacteur 4,
- une étape d'extraction en continu d'au moins une partie du mélange contenu dans le réacteur 4 par une sortie de boues 16.

Dans la présente description, le terme « circulation » de boues, d'un mélange ou d'un liquide dans le réacteur 4 désigne un mouvement quelconque de ces boues, de ce mélange ou de ce liquide dans le réacteur 4.

Dans la présente description, l'expression « chemin de circulation » désigne le chemin le long duquel ce mouvement quelconque est effectué dans le réacteur.

Dans la présente description, par l'expression « mise en circulation » des boues, du mélange ou d'un liquide dans le réacteur, on entend une création ou un maintien, directement à l'intérieur du réacteur 4, de la circulation (i.e. du mouvement) des boues, du mélange ou du liquide dans le réacteur, de préférence indépendamment de l'amplitude et de la direction de la vitesse d'introduction des boues dans le réacteur 4 par la première entrée 11.

Par circulation des boues, on entend typiquement dans ce mode de réalisation un déplacement relatif des boues définissant une vitesse moyenne de déplacement des boues Vd au sein du réacteur 4 typiquement de 0,1 à 3 m/s, une vitesse moyenne d'introduction des boues Ve par la première entrée 11 typiquement de 0,005 à 0,1m/s, ou encore un ratio Vd/Ve typiquement de 5 à 300.

Les boues injectées dans le réacteur 4 par la première entrée 11 sont acheminées comme décrit ci-dessous.

En premier lieu, les boues, contenant de la matière organique, proviennent par exemple d'une trémie (non représentée) pour être acheminées dans un conduit 100 (entrée du dispositif), par exemple par gravité. Les boues arrivant dans le conduit 100 ont typiquement une siccité en poids de matière sèche comprise entre 10 à 30%, typiquement comprise entre 18 et 24%. Ces boues sont acheminées jusqu'à un dispositif de préchauffage 2 de manière continue par un appareil 1 tel qu'une pompe, une vis, un appareil faisant intervenir la gravité, un transporteur mécanique ou tout moyen permettant d'acheminer les boues au dispositif de préchauffage 2. Cet appareil 1 est, dans l'exemple de la figure 1, une pompe.

Le dispositif de préchauffage 2 est agencé pour réaliser une étape de préchauffage dans laquelle on élève la température des boues avant leur injection dans le réacteur 4 jusqu'à une température de préchauffage. La température de préchauffage est dans cet exemple supérieure à 100°C, et la pression des boues lors de cette étape de préchauffage est supérieure à 0,1 MPa.

Ainsi, le dispositif de préchauffage 2 permet d'élever la température des boues en amont de la première entrée 11 par injection de vapeur dans les boues en amont du réacteur 4. La vapeur ainsi injectée par ce dispositif de préchauffage 2 est de préférence à basse pression, typiquement de pression comprise entre 0,1 MPa et 1 MPa, typiquement comprise entre 0,1 MPa et 0,5 MPa. Le dispositif de préchauffage 2 peut ainsi être un équipement de réchauffage des boues par échange direct de chaleur entre les boues et de la vapeur. La vapeur utilisée par le dispositif de préchauffage 2 a typiquement une température comprise entre 100°C et 180°C, typiquement comprise entre 100°C à 120°C.

Le dispositif de préchauffage 2 peut être constitué de tout appareil statique ou dynamique d'injection de vapeur comme une chambre confinée tubulaire avec chicanes statiques, un mélangeur dynamique avec pales rotatives, ou encore mettre en œuvre de multiples injection de vapeur en partie inférieure d'une trémie d'une vis de gavage permettant un mélange homogène des boues et de la vapeur injectée par un tel dispositif de préchauffage 2, ce mélange comprenant typiquement une grande quantité de boues et une petite quantité de vapeur.

Typiquement la quantité de vapeur injectée par le dispositif de préchauffage 2 représente en masse 5 à 25% de la masse de boues acheminées au dispositif de préchauffage 2, typiquement 10%.

Le préchauffage des boues se fait typiquement à une température comprise entre 50 et 150°C, de préférence supérieure à 70°C (de préférence comprise entre 70 et 80°C). Une telle température permet d'utiliser, en aval du dispositif de préchauffage 2, une pompe 3 simplifiée. En effet, une telle injection de vapeur par le dispositif de préchauffage 2 se traduit par une légère réduction de la siccité des boues. Par exemple, les boues présentent une siccité de 20% dans la pompe 1 en amont du dispositif de préchauffage 2, et elles présentent une siccité de 18% en aval du dispositif de préchauffage 2, par exemple dans la pompe 3.

En sortie du dispositif de préchauffage 2, les boues sont introduites par un conduit 101 dans la pompe 3 où elles sont mises sous pression, typiquement à une pression comprise entre 0,6 et 4 MPa, typiquement comprise entre 2,5 et 3 MPa.

Les pompes 1 et 3 fonctionnent de manière synchronisée, en fonction de la capacité d'absorption du réacteur 4.

Les boues sont ensuite acheminées vers le réacteur 4 par un conduit 102 reliant la pompe 3 et la première entrée 11 du réacteur 4.

La première entrée 11 est agencée pour injecter les boues dans le réacteur 4.

Les boues sont injectées directement et en continu dans le réacteur 4 de telle manière qu'elles soient intégrées rapidement au mélange contenu dans le réacteur 4. Typiquement, il se produit un effet de cisaillement des boues dans le réacteur 4 au niveau de la première entrée 11 en raison d'un effet de vitesse différentielle entre les boues injectées par la première entrée 11 (par exemple 1 cm/s) et le mélange en circulation dans le réacteur 4 au niveau de la première entrée 11 (par exemple 100 cm/s). Cette vitesse différentielle a typiquement un coefficient compris entre 5 et 300. Une orientation différente des vecteurs des vitesses respectives considérées entraîne l'effet de cisaillement qui permet un mélange rapide de la petite masse de boues froides injectées par la première entrée 11 avec la grande masse de boues carbonisées chaudes en circulation dans le réacteur 4. Ainsi, cet effet de cisaillement permet l'intégration d'une petite masse des boues injectées à une grosse masse de boues uniformément mélangées dans le réacteur 4.

La deuxième entrée 15 est agencée pour injecter la vapeur directement dans le réacteur 4, la deuxième entrée 15 étant distincte de la première entrée 11.

L'espace intérieur du réacteur 4 est configuré pour assurer une circulation du mélange dans un sens différent du sens d'injection de la vapeur par la deuxième entrée 15. En particulier, lors de l'étape d'injection de vapeur, la vapeur est de préférence injectée à contre-courant du mélange circulant dans le réacteur 4.

Dans la présente description, on entend par l'expression « contre-courant » le fait que, pour un sens de circulation (en moyenne) des boues dans le réacteur 4 au voisinage de la deuxième entrée 15 selon une direction principale, le sens d'injection de vapeur a au moins une composante opposée à la direction principale. Autrement dit, pour un sens de circulation (en moyenne) des boues dans le réacteur 4 au voisinage de la deuxième entrée 15 selon une direction principale, le sens d'injection de vapeur forme un angle positif avec la direction principale compris entre pi/2 et 3*pi/2 radians. De préférence, cet angle est de pi radians (vecteurs opposés).

L'étape de mise en circulation est réalisée pour obtenir un flux uniformément mélangé. On entend ici par l'expression « uniformément mélangé » le fait qu'une particule du mélange boues+vapeur dans le réacteur 4 a une probabilité d'atteindre n'importe quel point du réacteur occupé par le mélange boues+vapeur identique à la probabilité d'une autre particule du mélange boues+vapeur d'atteindre ce même point. On peut donc calculer le pourcentage d'uniformité comme étant une fraction entre un volume uniforme du mélange boues+vapeurs et le volume total occupé par le mélange boues+vapeurs. On considérera que le réacteur est uniformément mélangé s'il obtient un pourcentage d'uniformité supérieur à 90% (ou en d'autres termes il n'y a pas plus de 10% de "zone morte" ou les particules ne vont pas ou pas toujours). On peut mesurer ce volume uniforme du mélange boues+vapeurs par un test de traçage au lithium connu de l'homme de l'art.

Le fait que le réacteur soit uniformément mélangé favorise fortement les réactions chimiques en particulier par rapport à des réacteurs en « batch » ou en flux piston.

Les moyens de mise en circulation (non représentés), agencés pour mettre le mélange en circulation au sein du réacteur 4, permettent d'uniformiser un état du mélange dans le réacteur 4. Ils comprennent typiquement un circulateur (non représenté), par exemple à pâles, agencé pour faire circuler les boues dans l'espace intérieur du réacteur 4 suivant un chemin de circulation délimité par une ou plusieurs paroi(s) intérieure(s) (non représentée(s)).

Par « moyens de mise en circulation » ou « circulateur » des boues, du mélange ou d'un liquide dans le réacteur, on entend dans la présente description des moyens agencés pour créer ou maintenir directement à l'intérieur du réacteur 4 la circulation (i.e. le mouvement) des boues, du mélange ou du liquide, de préférence indépendamment de l'amplitude et de la direction de la vitesse d'introduction des boues dans le réacteur 4 par la première entrée 11.

Selon des variantes non représentées, ce circulateur peut comprendre :
- un agitateur avec une ou plusieurs pales, et/ou
- une vis, et/ou
- une pompe, et/ou
- une boucle de recirculation des boues, et/ou
- un bullage.

L'espace intérieur du réacteur 4 et en outre configuré pour former un volume de dégazage (non représenté) dans une partie supérieure de cet espace intérieur (c'est-à-dire une partie d'altitude plus élevée que d'autres parties de cet espace intérieur). Dans ce volume de dégazage, le mélange ne circule pas. Ce volume de dégazage est agencé pour récupérer des incondensables gazeux.

Le réacteur 4 est aussi pourvu d'une sortie des incondensables 13 reliant le volume de dégazage à un conduit d'évacuation 30 pour des traitements éventuels ultérieurs. Cette sortie des incondensables 13 est pilotée par une vanne pour contrôler la pression dans le réacteur 4.

De préférence, la deuxième entrée 15 est séparée de la première entrée par une distance supérieure à un douzième de la plus grande dimension linéaire de l'espace intérieur du réacteur 4. Cette distance est suffisante pour permettre l'effet de cisaillement. Cette distance est considérée comme la distance la plus courte entre deux points de la première entrée 11 et de la deuxième entrée 15 respectivement.

Le temps de séjour des boues dans le réacteur 1 peut être constaté par exemple par l'intermédiaire d'un traçage au lithium ou d'une modélisation numérique.

La vapeur directement injectée dans le réacteur 4 par le deuxième entrée 15 est saturée ou surchauffée à forte pression, typiquement comprise entre 0,6 et 4,5 MPa, typiquement comprise entre 2,5 et 3 MPa, et de température élevée, typiquement comprise entre 160 et 250°C, typiquement comprise entre 220°C et 240°C.

De préférence, la direction d'injection de la vapeur est opposée à la direction de circulation du mélange en circulation dans le réacteur 4, dans la zone située au voisinage de la deuxième entrée 15.

Cette injection de vapeur par la deuxième entrée 15 est faite pour contrôler la température du mélange dans le réacteur 4, et pour maintenir cette température à une valeur définie, typiquement comprise entre 140°C et 270°C, typiquement comprise entre 180°C et 200°C. Cette température est contrôlée en un ou plusieurs endroits du réacteur 4 pour contrôler l'homogénéité du mélange qu'il contient. Le débit de la vapeur ainsi injectée par la deuxième entrée 15 est régulé pour maintenir la température aux valeurs nominales susvisées, ce qui permet de limiter la quantité de vapeur et d'optimiser le bilan énergétique du dispositif, contrairement aux solutions de l'art antérieur mettant en œuvre un injecteur-mélangeur.

Selon ce mode de réalisation de l'invention, on réalise au choix :
- une étape d'injection de réactif dans laquelle on injecte dans le réacteur 4 un réactif de type acide pour maintenir le pH des boues contenues dans le réacteur 4 à une valeur inférieure à 6,
- une étape d'injection dans le réacteur 4 d'un réactif de type base pour maintenir le pH des boues contenues dans le réacteur 4 à une valeur supérieure à 8.

L'injection de réactif peut être régulée à l'aide d'une sonde pH. Par exemple, on peut injecter de manière automatisée l'un ou l'autre réactif (base ou acide) selon qu'un seuil inférieur ou supérieur de pH est atteint ou dépassé.

Pour injecter un réactif, le réacteur 4 comprend une entrée de réactif 12 relié à un conduit d'injection de réactif 5.

L'injection de réactif permet d'accélérer la réaction de carbonisation. Le pH est contrôlé, par exemple à l'aide d'une sonde pH, soit directement dans le réacteur 4 soit dans un conduit 103, 104, 105, 106 ou 107 en aval du réacteur 4 dans lequel circule les boues ayant subies l'étape de réaction hydrothermale.

La sortie de boues 16 est agencée pour extraire du réacteur 4 en continu au moins une partie du mélange qu'il contient.

Le dispositif de l'invention de la figure 1 permet aussi de mettre en œuvre au moins une étape de refroidissement dans laquelle les boues ayant subies l'étape de réaction hydrothermale sont refroidies. L'au moins une étape de refroidissement est décrite ci-dessous.

Le dispositif est agencé pour réaliser une étape de chauffage d'eau dans laquelle on transfère de la chaleur contenue dans les boues extraites du réacteur 4 à l'eau par l'intermédiaire de l'échangeur de chaleur 6, et dans laquelle on utilise l'eau ainsi chauffée pour produire la vapeur utilisée lors de l'étape d'injection de vapeur.

Pour ce faire, le dispositif de la figure 1 comprend un échangeur de chaleur 6 relié à la sortie de boues 16 par le conduit 103. Ce dispositif comprend aussi une chaudière 22 reliée à cet échangeur de chaleur 6 par un conduit 21. Cet échangeur de chaleur 6 est agencé pour transférer de la chaleur contenue dans les boues extraites du réacteur 4 à de l'eau circulant entre cet échangeur de chaleur 6 et la chaudière 22 par le conduit 21. La chaudière 22, alimentée par une autre source d'énergie (non représentée), est agencée pour fournir la vapeur injectée directement dans le réacteur 4 via un conduit 23 relié à la deuxième entrée 15.

L'eau circulant dans cet échangeur de chaleur 6 est typiquement chauffée jusqu'à une température comprise entre 120 et 260°C, typiquement comprise entre 160 et 170°C. Cette eau chauffée dans l'échangeur de chaleur 6 est conduite à la chaudière 22 par le conduit 21 qui va produire la vapeur directement injectée dans le réacteur 4 par la deuxième entrée 15.

L'eau arrivant par un conduit 20 dans cet échangeur de chaleur 6 a une qualité adéquate à la production de vapeur (adoucissement, déminéralisation, ...).

Cet échangeur de chaleur 6 peut être de tout type adapté à un tel échange, par exemple de type tube dans tube, à tube de fumées, tubes calandre...

Le dispositif de la figure 1 comprend en outre un échangeur de chaleur additionnel 7 agencé pour transformer en vapeur de l'eau circulant dans cet échangeur de chaleur additionnel 7 en utilisant de la chaleur contenue dans les boues extraites du réacteur 4, cette vapeur étant la vapeur injectée dans les boues en amont du réacteur 4 par le dispositif de préchauffage 2.

Les boues hydrolysées, déjà refroidies par l'échangeur de chaleur 6, sont acheminées par le conduit 104 de l'échangeur de chaleur 6 jusqu'à l'échangeur de chaleur additionnel 7. Cet échangeur de chaleur additionnel 7 sert à produire de la vapeur saturée ou légèrement surchauffée destinée à être injectée dans les boues circulant en amont du réacteur 4 par le dispositif de préchauffage 2. La vapeur ainsi produite a une pression comprise entre 0,1 et 1 MPa, typiquement comprise entre 0,15 et 0,3 MPa.

L'échangeur de chaleur additionnel 7 est de type bouilleur à tubes de fumées ou consiste en tout autre échangeur apte à produire de la vapeur saturée.

L'eau circulant dans l'échangeur de chaleur additionnel 7 arrive par un conduit 24 avec une qualité compatible avec la production de vapeur désirée, notamment en termes d'adoucissement, de déminéralisation...

Le dispositif de la figure 1 comprend aussi un équipement de refroidissement 8 agencé pour refroidir les boues extraites du réacteur 4 en provenance de l'échangeur de chaleur additionnel 7 par le conduit 105 les reliant. Ainsi, cet équipement de refroidissement 8 est monté en aval de l'échangeur de chaleur 6 et de l'échangeur de chaleur additionnel 7.

Les boues partiellement refroidies par l'échangeur de chaleur 6 et l'échangeur de chaleur additionnel 7 sont conduites via le conduit 105 dans cet équipement refroidissement 8 qui réalise une étape de refroidissement final. Cet équipement de refroidissement 8 est mis en œuvre de sorte que la température des boues ensuite acheminées vers un module de traitement final de déshydratation 10 par les conduits 106, 107 atteignent une température définie avant leur arrivé dans ce module 10. Cette température définie est typiquement comprise entre 40 et 90°C, typiquement comprise entre 60 et 70°C.

Pour réaliser cette étape de refroidissement final, l'équipement de refroidissement 8 peut être un échangeur dans lequel circulent d'une part les boues et d'autre part un fluide de type eau, air ou tout fluide de refroidissement disponible. Un tel fluide de refroidissement arrive dans cet équipement de refroidissement ou échangeur 8 par un conduit 26 et en ressort par un conduit 27. Le type de l'échangeur est par exemple un échangeur de type tube dans tube ou tube dans circuit de fumées.

En sortie de cet équipement de refroidissement 8, les boues arrivent dans un organe déprimogène 9 par le conduit 106 permettant à ces boues d'atteindre une pression proche de la pression atmosphérique avant le traitement final de déshydratation dans le module 10. L'organe déprimogène 9 et le module de traitement final de déshydratation 10 sont reliés l'un à l'autre par le conduit 107.

Cet organe déprimogène 9 peut être une pompe, une vanne, un diaphragme ou tout accessoire permettant d'abaisser ainsi la pression des boues.

### Démarrage du dispositif

Le démarrage du dispositif de la figure 1 se fait en préchauffant le réacteur 4 par l'injection de vapeur directement dans le réacteur 4 via la deuxième entrée 15, cette vapeur injectée provenant de la chaudière 22 par le conduit 23. Ce préchauffage du réacteur 4 est réalisé jusqu'à obtenir une température adéquate au sein du réacteur 4. Cette phase de démarrage est réalisée sans injection de boues dans le réacteur 4. Ce préchauffage du réacteur 4 se fait sans difficulté car le réacteur 4 est préalablement rempli d'eau, l'eau ayant une viscosité faible. La vapeur s'injecte donc facilement dans l'eau et se condense sur un faible volume, toute en réchauffant la masse d'eau contenue dans le réacteur 4.

Lorsque le réacteur 4 est chaud (atteinte de ladite température adéquate), on peut injecter les boues par la première entrée 11 grâce à la pompe 3, sans avoir forcément besoin de mettre en œuvre le dispositif de préchauffage 2. En effet, le fait d'injecter en continu une petite quantité de boues, en comparaison du volume disponible dans le réacteur 4 (typiquement 3 heures de temps de séjour), permet aux boues ainsi injectées de très rapidement monter en température et donc de se liquéfier et d'atteindre une rhéologie proche de celle de l'eau.

Ensuite, en amorçant la circulation des boues dans les conduits 103, 104, 105, 106 et 107, la production de vapeur pour le dispositif de préchauffage 2 va démarrer permettant aux boues de se préchauffer en amont du réacteur 4.

### Exemple de réalisation

L'exemple suivant va montrer l'intérêt des récupérations thermiques afin de diminuer fortement la consommation thermique du procédé.

Considérons que se trouvent dans le conduit 100 des boues de siccité 19% avec un débit de 2 700 kg/h. On préchauffe les boues à 70°C par injection dans le dispositif de préchauffage 2 de 262 kg/h de vapeur à 107°C et 0,13 MPa.

On néglige dans cet exemple la quantité d'acide ajoutée dans le réacteur 4.

Pour les besoins de chauffage du réacteur 4 à 190°C on va y injecter 707 kg/h de vapeur à 220°C et 3 MPa.

L'échangeur de chaleur 6 va permettre de préchauffer l'eau servant à produire la vapeur directement injectée dans le réacteur 4 de 10°C à 180°C et de refroidir les boues carbonisées circulant dans cet échangeur de chaleur 6 jusqu'à une température de 152°C.

L'échangeur de chaleur additionnel 7 va permettre de produire la vapeur servant au dispositif de préchauffage 2 à 0,13 MPa à partir d'une eau à 10°C, tout en refroidissant les boues carbonisées circulant dans cet échangeur de chaleur additionnel 7 jusqu'à une température de 103°C.

L'équipement de refroidissement 8 utilisant une eau à 10°C va permettre de refroidir à 70°C les boues carbonisées circulant dans cet équipement de refroidissement 8 avant leur déshydratation finale dans le module 10.

Ainsi, on récupère (190-103)/(190-70)=72,5% de l'énergie introduite dans le dispositif pour les besoins de son fonctionnement.

A noter que l'eau chaude produite dans l'équipement de refroidissement 8 peut aussi être utilisée pour des besoins externes au fonctionnement du dispositif de l'invention. Dans ce cas, 100% de l'énergie nécessaire au fonctionnement de ce dispositif est utilisé en interne ou en externe.

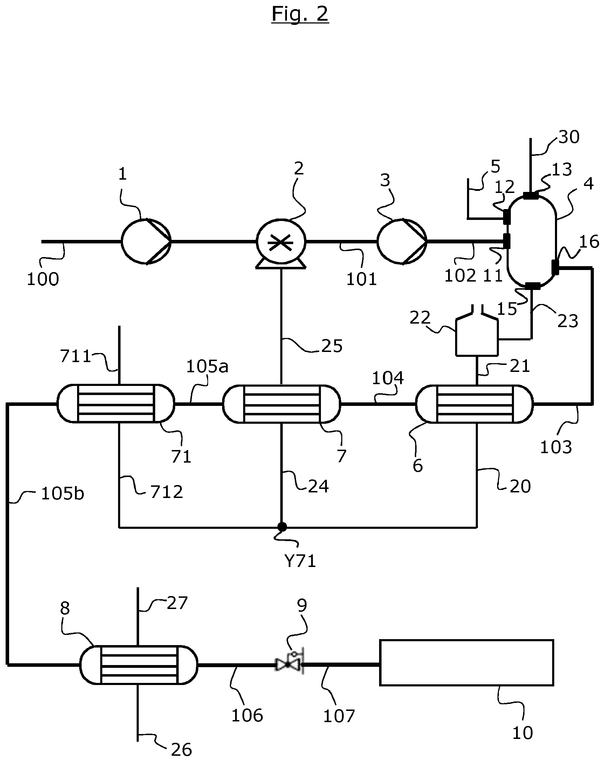

La figure 2 est une vue schématique d'un deuxième mode de réalisation d'installation de carbonisation hydrothermale selon l'invention, qui ne sera décrit que pour ses différences par rapport au premier mode de la figure 1.

Ce deuxième mode de réalisation comprend en outre un économiseur 71 agencé pour transférer de la chaleur contenue dans les boues extraites du réacteur 4 à de l'eau circulant entre cet économiseur 71 et d'une part l'échangeur de chaleur additionnel 7 et d'autre part l'échangeur de chaleur 6.

Dans cet exemple, l'économiseur 71 est monté en aval de l'échangeur de chaleur additionnel 7. Les boues sont acheminées de l'échangeur de chaleur additionnel 7 à cet économiseur 71 par un conduit 105a. Dans cet exemple, l'économiseur 71 est monté en amont de l'équipement de refroidissement 8. Les boues sont acheminées de l'économiseur 71 à l'équipement de refroidissement 8 par un conduit 105b.

Dans cet exemple, de l'eau, de préférence déminéralisée, arrive dans l'économiseur 71 par un conduit 711. L'eau dans le conduit 711 est typiquement à température ambiante. Cette eau ressort de l'économiseur 71 par un conduit 712, par exemple à une température de 90°C. Le conduit 712 est relié aux conduits 24 et 20, par exemple via une bifurcation Y71, de manière à acheminer l'eau réchauffée par l'économiseur 71 jusqu'à l'échangeur de chaleur additionnel 7 et jusqu'à l'échangeur de chaleur 6.

Un avantage d'un tel dispositif est de pouvoir, grâce à la mise en contact en fin de trajet d'un fluide froid avec les boues déjà refroidies, diminuer au maximum la température des boues en récupérant un maximum d'énergie pour les besoins du procédé.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Procédé de carbonisation hydrothermale en continu de boues contenant de la matière organique, lesdites boues présentant une siccité comprise entre 10 et 30% en poids de matière sèche, ledit procédé comportant une étape de réaction hydrothermale mise en œuvre dans un réacteur (4), l'étape de réaction hydrothermale comprenant les étapes suivantes :
- une étape d'injection de boues dans laquelle on injecte les boues dans le réacteur (4) par une première entrée (11),
- une étape d'injection de vapeur dans laquelle on injecte de la vapeur dans le réacteur (4) par une deuxième entrée (15), la deuxième entrée (15) étant distincte de la première entrée (11),
- une étape de mise en circulation dans laquelle on met un mélange constitué par les boues et la vapeur injectées dans le réacteur (4) en circulation au sein du réacteur (4),
- une étape d'extraction en continu d'au moins une partie du mélange contenu dans le réacteur (4) par une sortie de boues (16),
lors de l'étape d'injection de vapeur, la vapeur étant injectée à contre-courant du mélange circulant dans le réacteur (4),
le procédé étant **caractérisé en ce qu'**il comporte en outre une étape de chauffage d'eau dans laquelle on transfère de la chaleur contenue dans les boues extraites du réacteur (4) à de l'eau par l'intermédiaire d'un échangeur de chaleur (6), et dans laquelle on utilise l'eau ainsi chauffée pour produire la vapeur utilisée lors de l'étape d'injection de vapeur
le procédé comprenant en outre une étape de préchauffage dans laquelle on élève la température des boues avant leur injection dans le réacteur (4) jusqu'à une température de préchauffage , par injection de vapeur dans les boues.

2. Procédé selon la revendication 1, **caractérisé en ce que** la température de préchauffage est supérieure à 100°C, et **en ce que** la pression des boues lors de l'étape de préchauffage est supérieure à 0,1 MPa.

3. Procédé selon l'une quelconque des revendications précédentes, **caractérisé en ce qu'**il comporte en outre une étape d'injection de réactif dans laquelle on injecte dans le réacteur (4) un réactif, notamment un acide, pour maintenir le pH des boues contenues dans le réacteur (4) à une valeur inférieure à 6.

4. Procédé selon l'une quelconque des revendications 1 et 2, **caractérisé en ce qu'**il comporte en outre une étape d'injection de réactif dans laquelle on injecte dans le réacteur (4) un réactif, notamment d'une base, pour maintenir le pH des boues contenues dans le réacteur (4) à une valeur supérieure à 8.

5. Dispositif de carbonisation hydrothermale en continu de boues contenant de la matière organique, lesdites boues présentant une siccité comprise entre 10 et 30% en poids de matière sèche, ce dispositif comprenant un réacteur (4), le réacteur (4) comprenant :
- une première entrée (11) agencée pour injecter les boues dans le réacteur (4),
- une deuxième entrée (15) agencée pour injecter directement dans le réacteur (4) de la vapeur, la deuxième entrée (15) étant distincte de la première entrée (11),
- des moyens de mise en circulation agencés pour mettre un mélange constitué par les boues et la vapeur injectées dans le réacteur (4) en circulation au sein du réacteur (4), et
- une sortie de boues (16) agencée pour extraire du réacteur (4) en continu au moins une partie du mélange qu'il contient,
le réacteur étant configuré pour injecter la vapeur à contre-courant du mélange circulant dans le réacteur,
ledit dispositif étant **caractérisé en ce qu'**il comprend en outre un échangeur de chaleur (6) et une chaudière (22), cet échangeur de chaleur (6) étant agencé pour transférer de la chaleur contenue dans les boues extraites du réacteur (4) à de l'eau circulant entre cet échangeur de chaleur (6) et la chaudière (22), la chaudière (22) étant agencée pour fournir la vapeur injectée directement dans le réacteur (4), le dispositif comprenant en outre un dispositif de préchauffage (2) agencé pour élever la température des boues en amont de la première entrée (11) par injection de vapeur dans les boues en amont du réacteur (4)et un échangeur de chaleur additionnel (7) agencé pour générer de la vapeur en utilisant de la chaleur contenue dans les boues extraites du réacteur (4), cette vapeur étant de la vapeur injectée dans les boues en amont du réacteur (4) par le dispositif de préchauffage (2).

6. Dispositif selon la revendication 5, **caractérisé en ce qu'**il comprend en outre un équipement de refroidissement (8) agencé pour refroidir les boues extraites du réacteur (4), cet équipement de refroidissement (8) étant monté en aval de l'échangeur de chaleur (6) et de l'échangeur de chaleur additionnel (7).

7. Dispositif selon la revendication 6, **caractérisé en ce qu'**il comprend en outre un économiseur (71) agencé pour transférer de la chaleur contenue dans les boues extraites du réacteur (4) à de l'eau circulant entre cet économiseur (71) et d'une part l'échangeur de chaleur additionnel (7) et d'autre part l'échangeur de chaleur (6).

8. Dispositif selon la revendication 7, **caractérisé en ce que** l'économiseur (71) est monté en aval de l'échangeur de chaleur additionnel (7) et en amont de l'équipement de refroidissement (8).

## Patentansprüche

1. Kontinuierliches Hydrothermalkarbonisationsverfahren mit Schlämmen, die organisches Material enthalten, wobei die Schlämme eine Trockenheit aufweisen, die zwischen 10 und 30 Gew.% Trockenmasse liegt, wobei das Verfahren einen Schritt des hydrothermalen Reagierens umfasst, der in einem Reaktor (4) durchgeführt wird, wobei der Schritt des hydrothermalen Reagierens die folgenden Schritte umfasst:
- einen Schritt des Injizierens von Schlämmen, in dem die Schlämme in den Reaktor (4) durch einen ersten Eingang (11) injiziert werden,
- einen Schritt des Injizierens von Dampf, in dem Dampf in den Reaktor (4) durch einen zweiten Eingang (15) injiziert wird, wobei der zweite Eingang (15) verschieden vom ersten Eingang (11) ist,
- einen Schritt des Versetzens in Zirkulation, in dem ein Gemisch, bestehend aus den Schlämmen und dem Dampf, die in den Reaktor (4) injiziert wurden, innerhalb des Reaktors (4) in Zirkulation versetzt wird,
- einen Schritt des kontinuierlichen Extrahierens mindestens eines Teils des Gemischs, das im Reaktor (4) enthalten ist, durch einen Schlammausgang (16), wobei während des Schritts des Injizierens von Dampf der Dampf gegen den Strom des Gemischs, das im Reaktor (4) zirkuliert, injiziert wird,
wobei das Verfahren **dadurch gekennzeichnet ist, dass** es außerdem einen Schritt des Heizens von Wasser umfasst, in dem die Hitze, enthalten in den Schlämmen, die vom Reaktor (4) extrahiert wurden, an das Wasser mit Hilfe eines Wärmetauschers (6) übertragen wird, und wobei das so erhitzte Wasser verwendet wird, um den Dampf zu erzeugen, der während des Schritts des Injizierens von Dampf verwendet wird,
wobei das Verfahren außerdem einen Schritt des Vorheizens umfasst, in dem die Temperatur der Schlämme vor ihrer Injektion in den Reaktor (4) durch das Injizieren von Dampf in die Schlämme auf eine Vorheiztemperatur erhöht wird.

2. Verfahren nach Anspruch 1, **dadurch gekennzeichnet, dass** die Vorheiztemperatur über 100 °C liegt, und dadurch, dass der Druck der Schlämme während des Schritts des Vorheizens höher als 0,1 MPa ist.

3. Verfahren nach einem der vorhergehenden Ansprüche, **dadurch gekennzeichnet, dass** es außerdem einen Schritt des Injizierens von Reagens umfasst, in dem in den Reaktor (4) ein Reagens injiziert wird, insbesondere ein Säure, um den pH-Wert der Schlämme, die im Reaktor (4) enthalten sind, bei einem Wert von weniger als 6 zu halten.

4. Verfahren nach einem der Ansprüche 1 und 2, **dadurch gekennzeichnet, dass** es außerdem einen Schritt des Injizierens von Reagens umfasst, in dem in den Reaktor (4) ein Reagens injiziert wird, insbesondere eine Base, um den pH-Wert der Schlämme, die im Reaktor (4) enthalten sind, bei einem Wert von mehr als 8 zu halten.

5. Kontinuierliches Hydrothermalkarbonisationsverfahren mit Schlämmen, die organisches Material enthalten, wobei die Schlämme eine Trockenheit aufweisen, die zwischen 10 und 30 Gew.% Trockenmasse liegt, wobei diese Vorrichtung einen Reaktor (4) umfasst, wobei der Reaktor (4) Folgendes umfasst:
- einen ersten Eingang (11), der angeordnet ist, um die Schlämme in den Reaktor (4) zu injizieren,
- einen zweiten Eingang (15), der angeordnet ist, um Dampf direkt in den Reaktor (4) zu injizieren, wobei der zweite Eingang (15) verschieden vom ersten Eingang (11) ist,
- Mittel zum Versetzen in Zirkulation, die angeordnet sind, um ein Gemisch, bestehend aus den Schlämmen und dem Dampf, die in den Reaktor (4) injiziert wurden, innerhalb des Reaktors (4) in Zirkulation zu versetzen, und
- einen Schlammausgang (16), der angeordnet ist, um vom Reaktor (4) kontinuierlich mindestens einen Teil des Gemischs, das er enthält, zu extrahieren,
wobei der Reaktor konfiguriert ist, um Dampf gegen den Strom des Gemischs, das im Reaktor zirkuliert, zu injizieren,
wobei die Vorrichtung **dadurch gekennzeichnet ist, dass** sie außerdem einen Wärmetauscher (6) und einen Heizkessel (22) umfasst, wobei dieser Wärmetauscher (6) angeordnet ist, um Hitze, enthalten in den Schlämmen, die vom Reaktor (4) extrahiert wurden, an das Wasser zu übertragen, das zwischen diesem Wärmetauscher (6) und dem Heizkessel (22) zirkuliert, wobei der Heizkessel (22) angeordnet ist, um den Dampf zu liefern, der direkt in den Reaktor (4) injiziert wurde, wobei die Vorrichtung weiter eine Vorrichtung zum Vorheizen (2) umfasst, die angeordnet ist, um die Temperatur der Schlämme vorgelagert vom ersten Eingang (11) durch Injektion von Dampf in die Schlämme vorgelagert vom Reaktor (4) zu erhöhen, und einen zusätzlichen Wärmetauscher (7), der angeordnet ist, um unter Verwendung der Hitze, die in den Schlämmen, die vom Reaktor (4) extrahiert wurden, enthalten sind, Dampf zu erzeugen, wobei dieser Dampf Dampf ist, der in die Schlämme vorgelagert vom Reaktor (4) durch die Vorrichtung zum Vorheizen (2) injiziert wird.

6. Vorrichtung nach Anspruch 5, **dadurch gekennzeichnet, dass** sie außerdem eine Abkühlungsausrüstung (8) umfasst, die angeordnet ist, um die Schlämme abzukühlen, die vom Reaktor (4) extrahiert wurden, wobei diese Abkühlungsausrüstung (8) nachgelagert vom Wärmetauscher (6) und vom zusätzlichen Wärmetauscher (7) montiert ist.

7. Vorrichtung nach Anspruch 6, **dadurch gekennzeichnet, dass** sie außerdem einen Economiser (71) umfasst, der angeordnet ist, um Hitze, enthalten in den Schlämmen, die vom Reaktor (4) extrahiert wurden, an das Wasser zu übertragen, das zwischen dem Economiser (71) und einerseits dem zusätzlichen Wärmetauscher (7) und andererseits dem Wärmetauscher (6) zirkuliert.

8. Vorrichtung nach Anspruch 7, **dadurch gekennzeichnet, dass** der Economiser (71) nachgelagert vom zusätzlichen Wärmetauscher (7) und vorgelagert von der Abkühlungsausrüstung (8) montiert ist.

## Claims

1. A method of continuous hydrothermal carbonization of sludge containing organic matter, said sludge having a dryness between 10 and 30% by weight of dry matter, said method involving a step of hydrothermal reaction carried out in a reactor (4), **characterized in that** the hydrothermal reaction step involves the following steps:
- a step of injection of sludge in which the sludge is injected into the reactor (4) by a first inlet (11),
- a step of injection of steam in which steam is injected into the reactor (4) by a second inlet (15), the second inlet (15) being distinct from the first inlet (11),
- a step of placing in circulation, in which a mixture consisting of the sludge and the steam injected into the reactor (4) is placed in circulation within the reactor (4),
- a step of continuous extraction of at least a portion of the mixture contained in the reactor (4) by a sludge outlet (16),
and **in that** during the steam injection step the steam is injected in counterflow to the mixture circulating in the reactor (4),
the method being **characterized in that** it further involves a step of heating of water in which heat contained in the sludge extracted from the reactor (4) is transferred to water by means of a heat exchanger (6), and wherein the water so heated is used to produce the steam used during the step of steam injection,
the method being **characterized in that** it further involves a step of preheating in which the temperature of the sludge prior to its injection into the reactor (4) is raised up to a temperature of preheating, by injection of steam in the sludge.

2. The method as claimed in claim 1, **characterized in that** the temperature of preheating is greater than 100°C, and **in that** the pressure of the sludge during the preheating step is greater than 0.1 MPa.

3. The method as claimed in any one of the preceding claims, **characterized in that** it further involves a step of injection of reagent in which a reagent, especially an acid, is injected into the reactor (4) in order to maintain the pH of the sludge contained in the reactor (4) at a value less than 6.

4. The method as claimed in any one of claims 1 to 2, **characterized in that** it further involves a step of injection of reagent in which a reagent, especially a base, is injected into the reactor (4) in order to maintain the pH of the sludge contained in the reactor (4) at a value greater than 8.

5. A device for continuous hydrothermal carbonization of sludge containing organic matter, said sludge having a dryness between 10 and 30% by weight of dry matter, said device comprising a reactor (4), **characterized in that** the reactor (4) comprises:
- a first inlet (11) designed to inject the sludge into the reactor (4),
- a second inlet (15) designed to inject steam directly into the reactor (4), the second inlet (15) being distinct from the first inlet (11),
- means of placing in circulation, designed to place a mixture consisting of the sludge and the steam injected into the reactor (4) in circulation within the reactor (4), and
- a sludge outlet (16) designed to continuously extract at least a portion of the mixture contained in the reactor (4) from it,
and **in that** the reactor is configured to inject the steam in counterflow to the mixture circulating in the reactor,
the device being **characterized in that** it further comprises a heat exchanger (6) and a boiler (22), this heat exchanger (6) being designed to transfer heat contained in the sludge extracted from the reactor (4) to water circulating between this heat exchanger (6) and the boiler (22), the boiler (22) being designed to furnish the steam injected directly into the reactor (4), the device further comprising a preheating device (2) designed to raise the temperature of the sludge upstream from the first inlet (11) by injection of steam into the sludge upstream from the reactor (4) and an additional heat exchanger (7) designed to generate steam by utilizing the heat contained in the sludge extracted from the reactor (4), this steam being steam injected into the sludge upstream from the reactor (4) by the preheating device (2).

6. The device as claimed in claim 5, **characterized in that** it further comprises a cooldown apparatus (8) designed to cool the sludge extracted from the reactor (4), this cooldown apparatus (8) being mounted downstream from the heat exchanger (6) and the additional heat exchanger (7).

7. The device as claimed in claim 6, **characterized in that** it further comprises an economizer (71) designed to transfer the heat contained in the sludge extracted from the reactor (4) to water circulating between this economizer (71) and, on the one hand, the additional heat exchanger (7), and, on the other hand, the heat exchanger (6).

8. The device as claimed in claim 7, **characterized in that** the economizer (71) is mounted downstream from the additional heat exchanger (7) and upstream from the cooldown apparatus (8).
